# EUROPEAN PATENT APPLICATION

(11) **EP 0 989 684 A2**
(43) Date of publication of application: **29.03.2000**
(21) Application number: 99307671.0
(22) Date of filing: 29.09.1999
(51) Int. Cl.: H04B 1/38

(54) **Flexible pouch for portable communications apparatus**

(30) Priority: 29.09.1998 KR 9818586
(71) Applicant: Mildhands Ltd., Ipswich IP1 3LU (GB)
(72) Inventor: YANG, Yong Seok, Inchon, (KR)
(74) Representative: W.P. THOMPSON & CO.

(57) **Abstract**

A pouch for housing a cellular telephone, mobile telephone, pager or other portable communications apparatus comprises a flexible cover (10) of textile material having an opening (12) in one side to receive the communications apparatus. The opening (12)is preferably elasticated so that the pouch is suitable for various shapes and sizes of portable communications apparatus. A hole (16) is provided through the cover for an antenna. Internally, the cover is provided with resilient cushioning means (18) to absorb impacts. The flexibility of the cover and the stretchable opening enable the pouch to be used for a wide range of sizes and shapes of article, particularly mobile telephones.

## Description

This invention relates generally to pouches for portable communications apparatus, such as cellular telephones, mobile telephones and pagers. The invention is particularly concerned with a pouch for such items in which the outer cover is made of a flexible textile material and where the pouch has a stretchable opening so that it can accommodate portable communications apparatus of various shapes and sizes.

One known form of case for mobile telephones comprises a bag-shaped case which protects the telephone from dust and moisture, with the case being made generally of leather or vinyl plastics material.

Not only are cases for mobile telephones used to protect them against dust and moisture, but the cases can also be decorated and be presented in various shapes and colours.

However, since these cases for mobile telephones are made of leather or vinyl plastics material or the like, as mentioned above, their flexibility is so small that such cases cannot accommodate the various shapes of mobile telephone which are characteristic of different manufacturers. There is therefore the problem that for different shapes and sizes of mobile telephone one has to make a case which matches the particular telephone type of each manufacturer.

Also, with known cases for portable telephones the outer packaging is generally not good, due to the uniform shape, and the desirability of protecting the telephone from impacts is only poorly fulfilled due to the limitations of the material.

Thus, traditional cases for mobile telephones are very far from achieving the desired compatibility and functionality, with the result that many telephone users do not use them.

It is an object of the present invention to provide a pouch for portable communications apparatus, such as mobile telephones for example, which overcomes these problems.

In accordance with the present invention this object is achieved by providing a pouch for portable communications apparatus, comprising a flexible cover of textile material which has a stretchable opening in one side to receive an item of portable communications apparatus, and which has a hole therethrough for the passage of an antenna.

By making the cover of a flexible textile material and by providing a stretchable opening, an article such as a mobile telephone can be inserted and/or removed easily, according to the needs of the user. In particular, because the cover is made of a textile material, as compared with the conventional leather or vinyl plastics materials, various sewing techniques can be used so that the pouch can be manufactured in a decorative manner or in the shape of an animal for example, thereby to make the product more attractive to users and to meet their needs.

The stretchable opening preferably comprises an elastic band around the periphery of the opening.

The pouch of the present invention preferably includes resilient cushioning material to protect the mobile telephone or other device from impacts, as well as being light in weight. A resilient sponge material can be used for example, fitted within the pouch.

The pouch can also incorporate means to shield users against electromagnetic radiation produced by the article held in the pouch.

In order that the invention may be more fully understood, an embodiment of pouch in accordance with the invention will now be described by way of example and with reference to the accompanying drawings. In the drawings:

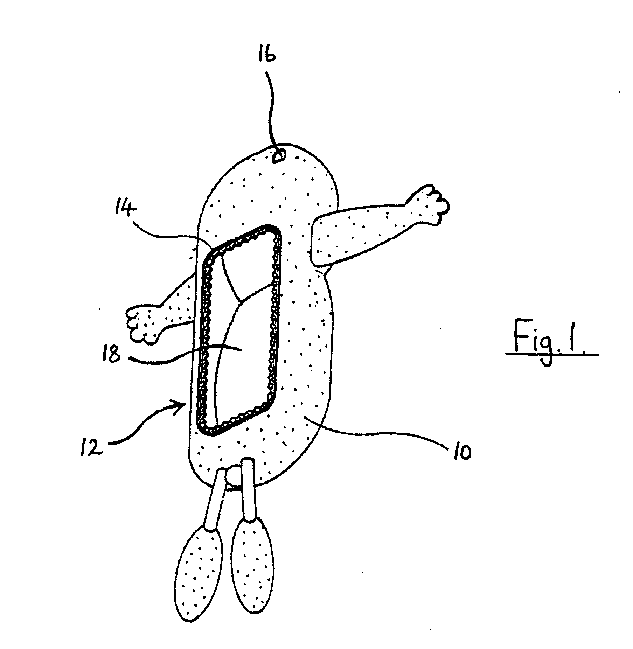

Fig. 1 is a perspective view of a pouch in accordance with the invention, shaped as an animal;

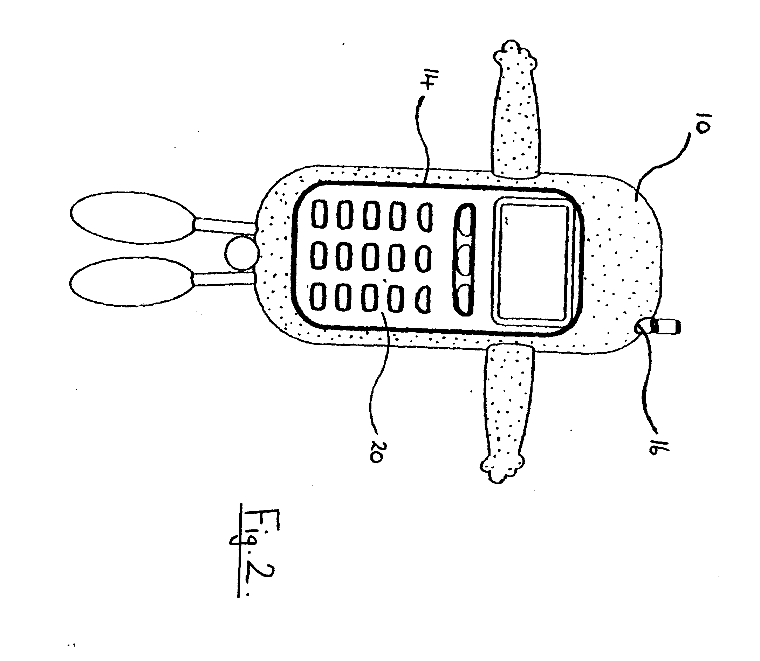

Fig. 2 shows the pouch of Fig. 1, with a mobile telephone inserted therein; and,

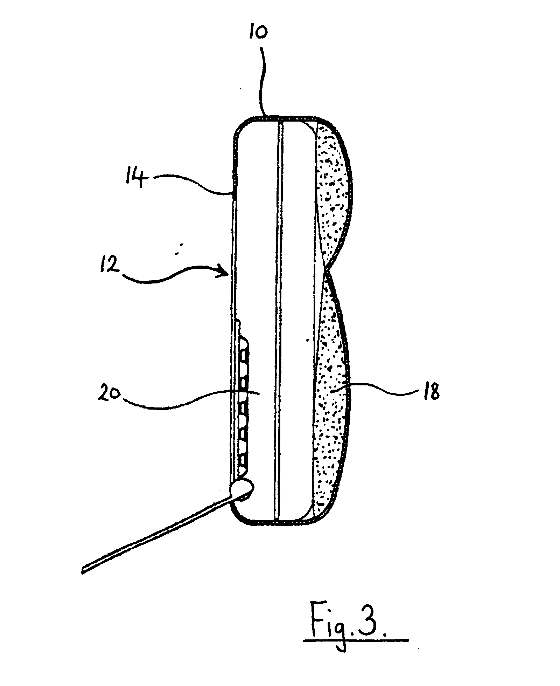

Fig. 3 is a sectional view through the pouch and telephone of Fig. 2 to illustrate the features thereof.

The pouch shown in the drawings comprises an outer cover 10 which is made of a flexible textile material. One side of the pouch is provided with an opening 12 which has an elasticated band 14 around its periphery to make the opening stretchable. This elasticated band 14 can comprise a rubber band for example. A hole 16 for an antenna is provided in the upper portion of the outer cover 10. Within the outer cover there is provided resilient impact-absorbing material 18 which is fixed to the inside of the outer cover 10 on the side thereof which is opposite the opening 12. This impact-absorbing material can be a plastics foam or sponge material which will absorb impacts, which is light in weight and which provides a cushion for a mobile telephone 20 or other such instrument which is inserted into the pouch. A mobile telephone is shown here at 20 by way of example.

In the illustrated embodiment, the pouch 10 is formed in the shape of an animal to provide visual appeal. Other shapes can of course be used.

As will be apparent from the drawings, the pouch of the present invention is compatible with various types and models of portable communications apparatus substantially irrespective of the external shape of the apparatus and its size, because the outer cover 10 is made of a flexible textile material. Consequently, it is not necessary to manufacture pouches of a wide range of different sizes for individual portable communications devices. The pouch of the present invention will accept a wide range of sizes and shapes of device 20.

When inserting a mobile telephone for example into the pouch, the antenna of the mobile telephone is first pushed through the hole 16 in the upper part of the pouch. The upper part of the mobile telephone 20 is then inserted into the pouch, the elasticated opening is stretched open, and then the remainder of the telephone 20 is inserted into the pouch. The mobile telephone is thus held securely within the pouch and is cushioned against impacts by the resilient material 18.

Since the key buttons of a bar-type of mobile telephone are exposed through the opening 12, the user can use the telephone with the pouch in place without limitations. The same applies in the case of a flip-type mobile telephone where the flip-up part of the telephone can be moved freely through the opening 12. The pouch of the present invention is therefore appropriate for use with either type of mobile telephone.

In the past, the space between the portable mobile telephone and its case is usually so small that the insertion and/or removal of the mobile telephone is very inconvenient. However, with the pouch of the present invention, made of flexible textile material, the insertion and/or removal of the communications device is easy, and the light weight and soft touch give the article a familiar feeling to users.

The resilient material 18 such as sponge material attached to the inside of the outer cover 10 has high elasticity, absorbs impacts, and is light and smooth, so that the portable communications device which is held in the pouch is protected against impacts if the pouch is dropped carelessly.

Because the pouch is made of a flexible textile material, various methods of sewing the pouch can be used and a wide variety of shapes can be devised for the pouch. Accessories are easy attachable to and removable from the pouch. In this way, the pouch can easily be personalised to satisfy the wishes of a particular user.

The pouch of the present invention can also incorporate an electromagnetic shield to prevent the passage of potentially harmful electromagnetic radiation. For example, the inside surface of the outer cover 10, or part of it, can be overlaid with a polyester textile coated with highly conductive metal such as copper or nickel. One such material which can be used for this purpose is that known by the trade name "Shieldron" manufactured by Dongjin E.M.I. Textile Co., Ltd of Korea. Such material can be provided in the form of a very fine textile mesh. The material is manufactured by adding a coating layer of a conductive metal with a thickness of for example 1/1000mm to fibres such as polyester, acrylic, nylon and silk. The effectiveness of the shielding is determined by the conductivity of the metal which is used for the coating. Gold is more effective than silver, which is more effective than copper, which is more effective than nickel.

## Claims

1. A pouch for portable communications apparatus, comprising a flexible cover (10) of textile material which has a stretchable opening (12) in one side to receive an item (20) of portable communications apparatus, and which has a hole (16) therethrough for the passage of an antenna.

2. A pouch as claimed in claim 1, **characterised in that** the cover is provided internally with resilient cushioning material (18).

3. A pouch as claimed in claim 1 or 2, **characterised in that** the resilient cushioning material (18) is attached to the cover (10) on the side opposite the side which has the opening (12).

4. A pouch as claimed in claim 1, 2 or 3 **characterised in that** the stretchable opening (12) comprises an elastic band (14) around the periphery of the opening.

5. A pouch as claimed in any preceding claim, which includes shielding means to prevent the transmission of electromagnetic radiation through the cover.

6. A pouch as claimed in claim 5, **characterised in that** the shielding means comprises flexible textile material coated with metal and overlaid on the inside of the cover (10).
